**Europäisches Patentamt**

**European Patent Office**

**Office européen des brevets**

(19)

(11) Veröffentlichungsnummer : **0 332 733 B1**

# EUROPÄISCHE PATENTSCHRIFT

(12)

(45) Veröffentlichungstag der Patentschrift :
22.05.91 Patentblatt 91/21

(51) Int. Cl.$^5$ : **A01G 9/10**

(21) Anmeldenummer : **88110992.0**

(22) Anmeldetag : **09.07.88**

(54) **Substrathülse für die Pflanzenanzucht.**

(30) Priorität : **12.03.88 DE 3808320**

(43) Veröffentlichungstag der Anmeldung :
**20.09.89 Patentblatt 89/38**

(45) Bekanntmachung des Hinweises auf die
Patenterteilung :
**22.05.91 Patentblatt 91/21**

(84) Benannte Vertragsstaaten :
**BE DE ES FR GB IT NL**

(56) Entgegenhaltungen :
**EP-A- 0 082 653**
**EP-A- 0 255 690**
**DE-A- 1 611 734**

(73) Patentinhaber : **Firma Carl Freudenberg**
**Höhnerweg 2-4**
**W-6940 Weinheim/Bergstrasse (DE)**

(72) Erfinder : **Frey, Günter**
**Schwarzwaldstrasse 1**
**W-7846 Schliengen (DE)**
Erfinder : **Wagner, Rudolf, Dr.**
**Hattsteinstrasse 12**
**W-7843 Heitersheim (DE)**

EP 0 332 733 B1

**Beschreibung**

Die Erfindung betrifft eine Substrathülse für die Pflanzenanzucht entsprechend dem Oberbegriff des Anspruchs 1.

In den letzten Jahren hat sich in Großgärtnereien und landwirtschaftlichen Großbetrieben ein Hochleistungsverfahren zur Pflanzenanzucht mit anschließender automatischer Auspflanzung der Jungpflanzen entwickelt : Zu Bändern geschnittene Flächenware aus Vliesstoff oder Papier wird zu einem Schlauch mit überlappender Längskante geformt. Der Schlauch wird über eine Dosiervorrichtung mit Mischungen aus Torf, Humus, Sägespänen und ggf. weiteren in der Agrikultur üblichen Hilfsstoffen gefüllt. Diese je nach Pflanzenart und Anbaubedingung sehr unterschiedlichen Füllungen werden im folgenden als "Substrat" bezeichnet.

Anschließend an das Füllen wird die Längskante mit Dispersionskleber an einer 350 bis 400°C heißen Kufe verklebt. Mit einer Stecheinrichtung werden aus dem waagerecht liegenden Schlauch 40 bis 130 mm lange Hülsenstücke abgestochen, mit Samen bestückt und mit Substrat- oder Holzspänen abgedeckt, um ein Austrocknen zu verzögern. Übliche Hülsen besitzen einen Durchmesser von 15 bis 30 mm.

Die bestückten Hülsen werden sodann in Container, sogenannte Trägerplatten, eingesetzt und bis ca. 2 Monate, je nach Pflanzenart, in Gewächshäusern kultiviert. Während dieser Anzuchtphase wird das Hülsenmaterial vom Wurzelwerk durchdrungen. Danach wird die Jungpflanze verpflanzt bzw. versandt.

Für den Verpflanzungsprozeß hat die Hülse noch ausreichende Festigkeiten ; anschließend verrottet sie, um das weitere Wachstum nicht zu behindern.

Der Einsatz solcher Substrathülsen gestattet bereits bei deren Fertigung hohe Produktionsgeschwindigkeiten bis zu 1000 Hülsen pro Minute.

Ferner werden gegenüber herkömmlichen Anzuchtmethoden Arbeitszeit und Substrat eingespart. Damit ist ein Kostenvorteil gegenüber der Anzucht von Hand gegeben. Die kleinere Anzuchtfläche ermöglicht eine erhöhte Flächenproduktivität. Es werden ein geringeres Transportgewicht und Transportvolumen erzielt. Durch die uniforme und stabile Substrathülse ist die einfache Entnahme aus der Trägerplatte und damit das automatisierte Auspflanzen möglich. Gleichzeitig ist die schonende Handhabung der Pflanzen und Wurzelballen gewährleistet. Im freistehenden Topf wird eine sehr gute Ausbildung der Jungpflanze erreicht.

Ein besonderer Vorteil dieser Anbaumethode liegt weiterhin in der Möglichkeit, mit Substrat gefüllte, jedoch unbesäte Hülsen für die Bevorratung herzustellen und diese dann bei Bedarf zu besäen. Dadurch wird ein hohes Maß an Flexibilität und Maschinenausnutzung für den Betreiber erreicht.

Aus dem beschriebenen Verfahren ergeben sich verarbeitungstechnische und kulturtechnische Anforderungen :

Verarbeitungstechnische Anforderungen (Konfektionierung) :

Zur optimalen Ronden- bzw. Schlauchformung sind ausreichende Eigensteifigkeit, Formstabilität und Flexibilität der Flächenware notwendig. Für den guten und problemlosen Maschinenlauf soll die Ware möglichst dünn und oberflächenglatt sein.

Kulturtechnische Anforderungen :

Während der Anzuchtphase von 5 bis 12 Wochen muß die Hülse verrottungsfest, d.h. ausreichend stabil im feuchten Substratmilieu, sein. Nach dem Verpflanzen oder Versand und Transport soll ein rascher Verrottungsprozeß des Hülsenmaterials ohne zusätliche chemische Beeinflussung erfolgen, damit die weitere Wurzelbildung und das Pflanzenwachstum nicht behindert werden. Es dürfen keine pflanzenschädigenden Rückstände entstehen.

Die Hülse soll den Wurzelballen zusammenhalten, ohne jedoch eine undurchdringliche Barriere für die Wurzeln darzustellen, d.h., es sind eine ausreichende Porosität und eine gute Naßfestigkeit der Flächenware notwendig. Ferner ist die Fähigkeit wichtig, Feuchtigkeit zu halten und zu speichern (Hydrophilie, gutes Saugvermögen von Wasser). Übliche Flächengewichte der aus Papier oder Vliesstoff bestehenden Hülsenmaterialien betragen 15 bis 50 g/m².

Zur Vermeidung von Pilzbefall (Schimmelbildung) wird das Hülsenmaterial bereits fungizid ausgerüstet. Diese Ausrüstung verhindert auch die vorzeitige Zersetzung der Hülse bei längerer Lagerung vor der eigentlichen Verwendung.

Die bekannten Hülsen sind in folgenden Punkten nachteilig :

Zur Verklebung der Hülsen mit Dispersionskleber an der beheizten Kufe ist eine kurzzeitige Temperaturbeständigkeit bis zu 400°C erforderlich. Bei der Nahtverbindung thermoplastischer Flächenware ohne Dispersionskleber soll die Klebestelle fest und dauerhaft sein.

Diese Anforderungen sind bei bekannten Hülsen nur bedingt erfüllt, da thermische Zersetzungen der Kunststoffmassen zu braunen bis schwarzen Klebenähten führen und das somit zersetzte Material keine zuverlässigen Klebenähte ergibt.

Bisherige Fungizidausrüstungen ersparten zwar deren Zugabe zum Gießwasser, erwiesen sich jedoch als nicht temperaturstabil während des Schweißens der Klebenähte, wodurch der gesamte Nahtbereich anfällig gegen Pilzbefall wurde.

Die bisher eingesetzten Hülsenmaterialien sind vor allem Zigarettenpapiere, welche zu wenig naßfest sind. Teebeutelpapiere und Kaffeefilter besitzen eine ungenügende Standzeit, d.h. ihre Zersetzung im feuchten Substrat durch Huminsäure, Bakterien und Pilze erfolgt sehr rasch. Vliesstoffe aus überwiegend Polyester- oder Polypropylen-Fasern ergeben bei der Hülsenherstellung mit Dispersionskleber nur ungenügend feste Nahtverbindungen.

Faserdarmpapiere aus zellulosischen Fasern, welche mit Naßfestmitteln gebunden sind, werden auf dem Gemüsesektor bereits eingesetzt. Sie überstehen die dort üblichen kurzen Anzuchtphasen, versagen jedoch aufgrund merklicher Zersetzung bei Standzeiten von 5 bis 8 Wochen. Die Lagerfertigung solcher Hülsen ist nicht möglich.

Eine weitere Schwierigkeit beim Einsatz bekannter Hülsen liegt in der Zugabe des Düngemittels. Während der Anzuchtphase muß ein dauerdüngendes Milieu gegeben sein. Die Zugabe des Dauerdüngers mit dem Gießwasser ist aufgrund der Schwerlöslichkeit nicht kontrolliert möglich ; es ist keine homogene Gießmischung herstellbar. Ein Dauerdüngemittelzusatz zum Substrat ist wegen des großen Unterschieds im spezifischen Gewicht zwischen Substrat und Dünger ebenfalls sehr problematisch. Es sind keine homogenen Substratmischungen herstellbar (Torf spezifisch leichter).

Aufgabe der vorliegenden Erfindung ist es, Hülsen anzugeben, welche die genannten Eigenschaften der bekannten Produkte besitzen und die folgenden, bisher nicht bewältigten Anforderungen meistern :

Zumindest einige Sekunden lange Temperaturbeständigkeit bis zu 400°C von Fasermaterial und Fungizid ; gleichmäßige Düngerverteilung auf oder im Hülsenmaterial bei großer Freiheit in der Mengenbemessung des Düngemittels ; bei Nahtverbindung von thermoplastischer Flächenware ohne Dispersionskleber feste und dauerhafte Klebestelle ; gleichmäßige Verteilung von Fungizid und Dünger.

Die Lösung dieser vielfältigen verarbeitungs- und kulturtechnischen Anforderungen besteht in einer Substrathülse mit den kennzeichnenden Merkmalen des Anspruchs 1. Vorteilhafte Varianten und Ausgestaltungen sind in den Unteransprüchen genannt.

Zur Temperaturbeständigkeit trägt insbesondere der hohe Zellulosefaseranteil von mindestens 50 Gew.% bei. Anteile an Zellulosefasern über 80% würden dagegen die Hülse zu schnell verrotten lassen (zu kurze Standzeit). Die Porosität, gemessen bei 1,0 mbar Luftdurchlaß, kann bequem durch versuchsweises Abmischen mit Synthesefasern eines Titers von 1,3 bis 17 dtex eingestellt werden. Als idealer Bereich zeigten sich Werte von 1000 bis 1600 1/s.m².

Das Hauptgewicht der vorliegenden Erfindung liegt auf der Zugabe eines in Polymermasse eingebetteten Dauerdüngemittels von 10 bis 50 g/m².

Zur Verarbeitung in die Flächenware sind Partikeldurchmesser des Düngemittels unter 80 µm notwendig, um maschinengängige Pasten, Dispersionen oder Beschichtungsmassen zu erhalten.

Man kennt prinzipiell zwei unterschiedliche Langzeitdüngerarten :

1. Wasserlöslicher Dünger, eingekapselt in einen wasserunlöslichen Mantel : Der Mantel wird mit der Zeit durch biologische Vorgänge durchlässiger, so daß Dünger durchdiffundieren kann.

2. In Wasser schwerlösliche organische Stickstoffverbindungen : Aufgrund der Schwerlöslichkeit wird der Dünger in kleinen Dosen über längere Zeit freigesetzt.

Das Fasermaterial kann durch übliche Bindemittel verfestigt werden ; zweckmäßig sind hierbei Ethylen-Vinylacetat, Acrylat, Polyvinylacetat, Polyvinylamid, Stärke, Zellulosederivate, Epichlorhydrinharze, Melaminformaldehyd-bzw. Harnstoff-Formaldehydharze, einzeln oder in Kombinationen. Die Auftragsmengen sollten 3 bis 25 g/m² betragen.

Als besonders vorteilhaft wurde ein Bindemittel gefunden aus einem hochvernetzten Acrylat und/oder Formaldehydharz ohne sauren Vernetzungskatalysator, da dieser nachteiligerweise beim Verschweißen eine thermische Zersetzung katalysieren würde. Die Auswahl dieser Bindemittel löst somit überraschenderweise die Temperaturprobleme beim Fertigen der Nähte (Schwächung der Naht durch Zersetzung tritt nicht mehr ein).

Der Vliesstoff bzw. das Papier zur Herstellung der erfindungsgemäßen Substrathülse kann nach bekannten Techniken im Trocken- oder Naßverfahren hergestellt werden. Die Synthesefasern sind zweckmäßig aus Polyester, Polyvinylalkohol, Polyacetat oder Polyamid, sofern sie einen Titer zwischen 1,3 und 17 dtex aufweisen, um die geeignete Porosität herstellen zu können.

Bei einer vorteilhaften Variante der erfindungsgemäßen Hülse ist das Bindemittel ein bei 140 bis 250°C heißsiegelfähiges Polyvinylchlorid oder Ethylenvinylacetat-Copolymeres. Damit ist die Verklebung der Flächenware zu Hülsen ohne zusätzlichen Klebstoff möglich.

Eine weitere vorteilhafte Ausgestaltung des Hülsenmaterials enthält an Stelle eines Bindemittels heißsiegelfähige, thermoplastische Fasern auf Copolyester- oder PVC-Basis mit Klebeeigenschaften bei 140 bis 250°C. Diese Fasern liegen in einem Anteil von 10 bis 30 Gew.% in der Fasermasse vor.

Falls ein Bindemittel verwendet wird, ist es vorteilhaft, Fungizid und Düngemittel in das Bindemittel verteilt einzuarbeiten. Konventionelle Methoden zum Ausrüsten sind jedoch ebenfalls möglich, wie Bedrucken, Tränken oder Sprühen. Für das Düngemittel wurden 10 bis 50 g/m², für das Fungizid 0,1 bis 3 g/m² als ideale Auftragmengen ermittelt.

Bekannte Fungizide sind anorganische Kupferverbindungen, Sorbate, Thiocarbamate und andere Schwefel-Stickstoff-heteracyclische Substanzen.

Die Einsatzmenge des Düngemittels richtet sich nach der Art der Anzuchtpflanze und damit nach der Dauer der Anzuchtphase. Als besonders vorteilhaft hat es sich erwiesen, das Depot-Düngemittel, in eine polymere Masse aus Hydroxyethylcellulose oder Polyacrylsäure gleichmäßig eingearbeitet, im Punktraster auf die Faseroberfläche aufzudrukken (Schablonendruck). Ein ganzflächiger Auftrag, z.B. Beschichtung durch Streichen, führte zu einer starken Versteifung des Produktes, was sich nachteilig bei der weiteren Verarbeitung auswirkte.

Besonders geeignet sind Depot-Dünger der schwerlöslichen Kategorie, insbesondere auf Basis von Crotonylidendiharnstoff (z.B. Handelsprodukt Triabon der Firma BASF).

Als besonders widerstandsfähig gegen Verschweißungstemperaturen von bis zu 400°C haben sich Kupfer(II)oxychlorid und Calciumsorbat erwiesen.

Die Erfindung besitzt neben den genannten noch die folgenden Vorteile : bezüglich der verarbeitungstechnischen Seite gibt es keine kritische Substratmischung mehr. Substratmischungen aus dem spezifisch schwereren Düngemittel und dem spezifisch leichteren Substrat wären nicht ausreichend homogen herstellbar.

Die kulturtechnischen Vorteile bestehen darin, daß am Beginn der Aufzucht an den Samen bzw. an den Keimling keine Salze (z.B. Düngemittel) herankommen dürfen. Das Samenkorn ist ca 1 cm von der aktiven Schicht, d.h. von der düngend wirkenden Hülsenwand, entfernt. Das Düngemittel kommt dadurch zeitverzögert an und erfüllt somit die oben genannte Forderung. Die dauerdüngende Eigenschaft der Hülse ermöglicht damit ein Keimpflanzensystem, bei dem keine Bewässerungsdüngung erforderlich ist.

Diese Vorteile werden erreicht durch den Kerngedanken der vorliegenden Erfindung, das Hülsenmaterial selbst als Träger des Düngemittels auszubilden.

Beispiel :

Nach bekannter Technik wird ein Naßvliesstoff hergestellt aus 15,4 g/m² gebleichten Zellstoff-Fasern und 6,6 g/m² Polyacrylnitril-Fasern einer Schnittlänge von 12 mm und einem Titer von 1,7 dtex : Öffnen der Fasern im Pulper ; Mischen und Dispergieren in Wasser bis zu einer Verdünnung von 0,03% ; Entwässern und Faserablage am Steilsieb ; Vorverfestigung durch berührungsloses Auftragen von 3,8 g/m² Acrylatbindemittel und 0,2 g/m² Melamin-Formaldehydharz ; anschließend Trocknen und Vernetzen im Durchströmtrockner bei 180 bis 190°C ; Nachbindung durch Foulard-Auftrag von 0,96 g/m² Polyvinylalkohol und 0,08 g/m² Melamin-Formaldehydharz, darin suspendiert als Fungizid Kupfer(II)oxychlorid ; Trocknung und Vernetzung bei 180 bis 190°C wie oben. Die Trocknerverweilzeiten betragen jeweils 10 s.

Es folgt das Herstellen der Düngerpaste : Crotonylidendiharnstoff und der Verdicker Hydroxyethylcellulose werden in einen evakuierten Mischer, in dem Wasser vorgelegt wurde, gesaugt, und es wird unter Vakuum gerührt, um Luft bzw. Gase auszutreiben und eine homogene Mischung zu erhalten, welche eine Viskosität von 10000 cP besitzt. Diese wird sodann mittels Schablonendruck punktförmig in einer Menge von 36 g/m² auf die Vliesstoffoberfläche aufgedruckt. Nach dem Druckvorgang wird bei 150°C getrocknet.

Das entstandene Flächengebilde wird in eine Spezialmaschine übergeführt, die sich von der Zigarettenhülsenfertigung ableitet. Dort wird es zu Bändern geschnitten und zu Schläuchen mit 20 mm Innendurchmesser sowie überlappender Längskante geformt. Dabei liegt jeder Schlauch in einer waagerechten Rinne und wird über eine Dosiervorrichtung mit Substrat gefüllt. Anschließend erfolgt die Verklebung der Längskante durch kurzzeitigen Kontakt an einer 350 bis 400°C heiden Kufe. Danach werden jeweils 100 mm lange Substrathülsen abgestochen, mit Samen bestückt und mit Substrat abgedeckt.

Die Nahtstellen zeigen keinerlei Schwärzung ; das Düngemittel ist einsatzbereit in der Hülle vorhanden und braucht vom Verwender nicht mehr nachträglich zugegeben zu werden.

## Ansprüche

1. Substrathülse für die Pflanzenanzucht, bestehend aus einem nichtgewebten gebundenen, mit Mengen von 0,1 bis 3 g/m² an Fungiziden ausgerüstetem Fasermaterial von 15 bis 50 g/m², gekennzeichnet durch Gehalte von 50 bis 80 Gew.% Zellulosefasern, 10 bis 40 Gew.% Synthesefasern mit einem Titer von 1,3 bis 17 dtex und 10 bis 30 Gew.% Faserbindemittel, durch eine Porosität von 1000 bis 1600 1/s.m² (Luftdurchlaß bei 1,0 mbar) und durch einen zusätzlichen Gehalt an in Polymermasse eingebettetem Depot-Düngemittel von 10 bis 50 g/m², dessen Korngrößen unter 80 μm liegen.

2. Substrathülse nach Anspruch 1, dadurch gekennzeichnet, daß das Bindemittel ein hochvernetztes Acrylat und/oder Formaldehydharz-Bindemittel ohne sauren Vernetzungskatalysator ist.

3. Substrathülse nach Anspruch 1, dadurch gekennzeichnet, daß das Bindemittel ein bei 140 bis 250°C Werkzeugtemperatur heißsiegelfähiges PVC oder EVA-Copolymeres ist.

4. Substrathülse nach Anspruch 1, dadurch gekennzeichnet, daß das Bindemittel in Form von heißsiegelbaren thermoplastischen Fasern auf Copolyester- oder PVC-Basis mit Klebeeigenschaften bei 140 bis 250°C vorliegt.

5. Substrathülse nach Anspruch 1 bis 3, dadurch gekennzeichnet, daß Fungizid und Düngemittel im Bindemittel verteilt vorliegen.

6. Substrathülse nach Anspruch 1 bis 4, dadurch gekennzeichnet, daß das Düngemittel, in Druckpaste eingebettet, auf der Faseroberfläche im Punktraster aufgedruckt vorliegt.

7. Substrathülse nach den Ansprüchen 2, 5 und 6, dadurch gekennzeichnet, daß es als Fungizid Kupfer (II) oxychlorid oder Calciumsorbat enthält.

8. Substrathülse nach den Ansprüchen 1 bis 4, 6 oder 7, dadurch gekennzeichnet, daß das Düngemittel in einer rasterartig aufgedruckten, polymeren Masse aus Hydroxyethylcellulose oder Polyarrylsäure gleichmäßig verteilt vorliegt.

9. Substrathülse nach einem der vorhergehenden Ansprüche, dadurch gekennzeichnet, daß das Düngemittel Crotonylidendiharnstoff-Depotdünger ist.

## Claims

1. A substrate envelope for crop cultivation, composed of a non-woven bonded fibre material of from 15 to 50 g/m² treated with a fungicide in an amount of from 0.1 to 3 g/m², characterised by contents of from 50 to 80% by weight of cellulose fibre, from 10 to 40% by weight of synthetic fibre from 1.3 to 17 dtex in linear density and from 10 to 30% by weight of a fibre binder, by a porosity of from 1000 to 1600 1/s.m² (air permeability at 1.0 mbar) and by an additional content of from 10 to 50 g/m² of a polymer-embedded depot fertiliser whose particle size is below 80 µm.

2. A substrate envelope according to claim 1, characterised in that the binder is a highly crosslinked acrylate and/or formaldehyde resin binder without an acidic crosslinking catalyst.

3. A substrate envelope according to claim 1, characterised in that the binder is a PVC or EVA copolymer which is hot-sealable at a tool temperature of from 140 to 250°C.

4. A substrate envelope according to claim 1, characterised in that the binder is present in the form of hot-sealable thermoplastic fibres based on copolyester or PVC and having adhesive properties at from 140 to 250°C.

5. A substrate envelope according to any of claims 1 to 3, characterised in that the fungicide and the fertiliser are present dispersed in the binder.

6. A substrate envelope according to any of claims 1 to 4, characterised in that the fertiliser is embedded in a print paste applied to the fibre surface in a dot pattern.

7. A substrate envelope according to any of claims 2, 5 and 6, characterised in that the fungicide is copper (II) oxychloride or calcium sorbate.

8. A substrate envelope according to any of claims 1 to 4, 6 or 7, characterised in that the fertiliser is present uniformly dispersed in a polymeric material of hydroxyethylcellulose or polyacrylic acid applied as a dot pattern print.

9. A substrate envelope according to any one of the preceding claims, characterised in that the fertiliser is a crotonylidinediurea depot fertiliser.

## Revendications

1. Manchon de substrat pour la culture des plantes, constitué d'un matériau en fibres liées non tissées de 15 à 50 g/m², comportant un fongicide à raison de 0,1 à 3 g/m², caractérisé par des teneurs en fibres cellulosiques de 50 à 80% en poids en fibres synthétiques, avec un titre de 1,3 à 17 dtex entre 10 et 40% en poids et des liants de fibres à raison de 10 à 30% en poids, par une porosité de 1000 à 1600 1/s.m² (passage de l'air sous 1,0 mbar) et par une teneur supplémentaire en engrais de dépôt incorporés à la masse polymère à raison de 10 à 50 g/m² et dont la granulométrie est inférieure à 80 µm.

2. Manchon de substrat selon la revendication 1, caractérisé en ce que le liant est un acrylate fortement réticulé et/ou un liant à la résine formaldéhyde sans catalyseur acide de réticulation.

3. Manchon de substrat selon la revendication 1, caractérisé en ce que le liant est un PVC ou un copolymère EVA pouvant se ramollir à chaud à la température de l'outil de 140 à 150°C.

4. Manchon de substrat selon la revendication 1, caractérisé en ce que le liant se présente sous forme de fibres thermoplastiques ramollissables à chaud, à base de copolyester ou de PVC, avec des caractéristiques de collage entre 140 et 250°C.

5. Manchon de substrat selon les revendications 1 à 3, caractérisé en ce que le fongicide et l'engrais sont répartis dans le liant.

6. Manchon de substrat selon les revendications 1 à 4, caractérisé en ce que l'engrais incorporé à une pâte d'impression est appliqué par impression suivant un réseau de points sur la surface des fibres.

7. Manchon de substrat selon les revendications 2, 5 et 6, caractérisé en ce qu'il contient comme fongicide de l'oxychlorure de cuivre (II) ou du sorbate de calcium.

8. Manchon de substrat selon les revendications 1 à 4, 6 ou 7, caractérisé en ce que l'engrais se présente sous forme d'une masse polymère appliquée en forme de réseau, de manière uniforme et constituée d'hydroxyéthylcellulose ou d'acide polyacrylique.

9. Manchon de substrat selon l'une des revendications précédentes, caractérisé en ce que l'engrais est un engrais de longue durée de crotonylidènediurée.